# EUROPEAN PATENT APPLICATION

(11) **EP 4 164 035 A1**
(43) Date of publication of application: **12.04.2023**
(21) Application number: 20943165.9
(22) Date of filing: 02.07.2020
(51) Int. Cl.: H01M 50/172

(54) **ELECTROCHEMICAL DEVICE AND ELECTRIC DEVICE**

(71) Applicant: Ningde Amperex Technology Limited, Zhangwan Town, Jiaocheng District Ningde City Fujian 352100 (CN)
(72) Inventor: MA, Wu, Ningde City, Fujian Province 352100 (CN); ZHANG, Guowen, Ningde City, Fujian Province 352100 (CN)
(74) Representative: Icosa
(86) International application number: PCT/CN2020/099930
(87) International publication number: WO 2022/000422

(57) **Abstract**

This application discloses an electrochemical apparatus and an electric apparatus. The electrochemical apparatus includes an electrode assembly and a housing for accommodating the electrode assembly, where the housing includes a first housing body and a second housing body fixedly connected to the first housing body, at least one of the first housing body or the second housing body is provided with a notch, and a side edge of the notch is non-vertical with respect to a bottom edge of the notch; and the electrode assembly includes a tab, where the tab protrudes out from the notch to outside the housing, and the notch is filled with a sealing material. The electrochemical apparatus in this application has high sealing reliability, and in a sealing manner of filling the sealing material into the notch whose side edge is non-vertical with respect to the bottom edge, small space is occupied, thereby increasing energy density of the electrochemical apparatus.

## Description

### TECHNICAL FIELD

This application relates to an electrochemical apparatus and an electric apparatus.

### BACKGROUND

Electrochemical apparatuses can be charged and discharged, and have been widely applied to fields such as consumer products, digital products, power products, medicine, and security. A process for extending an electrode in the existing electrochemical apparatus is as follows: A through hole is firstly disposed in a side wall of a housing, then an electrode is disposed in the through hole and sealed with an insulation pad, an end, located inside the housing, of the electrode is electrically connected to a tab, and the other end of the electrode is outside the housing and is configured to be connected to an external electronic device. Such sealing structure occupies large internal space of the electrochemical apparatus, which causes a large loss for energy density of the electrochemical apparatus. In addition, the sealing structure is complex, needs costly process, and has low reliability.

### SUMMARY

This application is intended to resolve at least one of the technical problems in the prior art. In view of this, an aspect of this application provides an electrochemical apparatus, where a notch is provided in a housing of the electrochemical apparatus to extend a tab, and a side edge of the notch is non-vertical with respect to a bottom edge of the notch, which allows a sealing material in the notch to be better compressed, thereby ensuring a simple and reliable sealing structure.

The electrochemical apparatus in this embodiment of this application includes an electrode assembly and a housing for accommodating the electrode assembly, where the housing includes a first housing body and a second housing body fixedly connected to the first housing body, at least one of the first housing body and the second housing body is provided with a notch, and a side edge of the notch is non-vertical with respect to a bottom edge of the notch; and the electrode assembly includes a tab, where the tab protrudes out from the notch to outside the housing, and the notch is filled with a sealing material.

In some embodiments, the sealing material includes any one of polypropylene, polycarbonate, polyamide, polystyrene, fluorine rubber, or soluble polytetrafluoroethylene.

In some embodiments, the housing further includes a sealing auxiliary member, the sealing auxiliary member includes a butting portion, and the butting portion is located at a corner of the notch and is configured to butt against the sealing material in a corner region at the top of the notch.

In some embodiments, the sealing auxiliary member and the housing are an integral structure or separate structures.

In some embodiments, one of a wall of the notch or the sealing material is provided with a boss and the other is provided with a recess, where the boss fits into the recess.

In some embodiments, the first housing body is a top cover of the housing, and the second housing body includes a side wall and a bottom wall connected to the side wall.

In some embodiments, the butting portion is disposed at the top cover, and the notch is disposed in the side wall.

In some embodiments, the side wall is provided with a step portion, and the step portion is configured to support the top cover.

In some embodiments, the side wall is provided with a first step portion, the top cover is provided with a second step portion corresponding to the first step portion, and the first housing body and the second housing body are connected via the first step portion and the second step portion to form the housing.

In some embodiments, the first housing body is provided with a first notch, the second housing body is provided with a second notch corresponding to the first notch, and the first notch and the second notch together form the notch.

In some embodiments, a boss is disposed at a bottom surface of the first notch and/or the second notch, and the sealing material is provided with a recess corresponding to the boss, where the boss fits into the recess.

In some embodiments, a recess is disposed at a bottom surface of the first notch and/or the second notch, and the sealing material is provided with a boss corresponding to the recess, where the boss fits into the recess.

In some embodiments, the first housing body includes a first side wall and a first bottom wall connected to the first side wall, and the second housing body includes a second side wall and a second bottom wall connected to the second side wall.

In some embodiments, the first side wall is provided with a first step portion, the second side wall is provided with a second step portion corresponding to the first step portion, and the first housing body and the second housing body are connected via the first step portion and the second step portion to form the housing.

In some embodiments, the notch is a trapezoid in shape.

In some embodiments, the housing further includes a third housing body, where the first housing body is a top cover of the housing, the second housing body is a side wall of the housing, the third housing body is a bottom cover of the housing, and the first housing body, the second housing body, and the third housing body are sequentially connected to form the housing.

In some embodiments, a high-temperature protection material is filled between the wall of the notch and the sealing material, and the tab, the sealing material, and the high-temperature protection material form an m-layer structure in the notch, where an outermost layer of the structure is the high-temperature protection material, and m is a positive integer greater than or equal to 3 and less than or equal to 10.

In some embodiments, a melting point of the high-temperature protection material is greater than or equal to 300°C.

In some embodiments, the protection material includes any one of steel alloy, aluminum alloy, iron alloy, copper alloy, liquid crystalline polymer, 4-hydroxybenzaldehyde, polyethylene terephthalate, polyvinyl chloride, polyimide, acrylonitrile-butadiene-styrene copolymer, polycarbonate, polyamide, or polystyrene.

In some embodiments, the first housing body is fixedly connected to the second housing body vertically or horizontally.

In some embodiments, the first housing body is fixedly connected to the second housing body by at least one of gluing, heat sealing, or welding.

In some embodiments, the first housing body and the second housing body are both made of plastic.

In some embodiments, the plastic is any one of liquid crystalline polymer, 4-hydroxybenzaldehyde, polyethylene terephthalate, polyvinyl chloride, polyimide, acrylonitrile-butadiene-styrene copolymer, polycarbonate, or polyamide.

In some embodiments, the electrode assembly includes two tabs, and the two tabs both protrude out from the notch to outside the housing.

In some embodiments, the electrode assembly includes a cathode plate, an anode plate, a separator, and two tabs, where the separator is disposed between the cathode plate and the anode plate, and the two tabs are respectively electrically connected to a cathode current collector of the cathode plate and an anode current collector of the anode plate.

In some embodiments, the two tabs protrude out from a same side of the housing, or the two tabs protrude out from different sides of the housing.

In some embodiments, the step portion, the first step portion, and the second step portion are all L-shaped.

Another aspect of this application provides an electric apparatus, including an electrochemical apparatus. The electrochemical apparatus includes an electrode assembly and a housing for accommodating the electrode assembly, where the housing includes a first housing body and a second housing body fixedly connected to the first housing body, at least one of the first housing body or the second housing body is provided with a notch, and a side edge of the notch is non-vertical with respect to a bottom edge of the notch; and the electrode assembly includes a tab, where the tab protrudes out from the notch to outside the housing, and the notch is filled with a sealing material.

Based on the electrochemical apparatus in the embodiments of this application, the notch with the side edge non-vertical with respect to the bottom edge is provided in the housing of the electrochemical apparatus to extend the tab. Because the side edge of the notch is arranged to be non-vertical with respect to the bottom edge of the notch, when the first housing body and the second housing body are fitted together, vertical pressure applied to the sealing material is transferred to the non-vertical edge of the notch, which in turn generates component forces vertical to the non-vertical edge. Because of principles of an acting force and a counter-acting force, the non-vertical edge also applies to the sealing material a pressure in a direction perpendicular to the non-vertical edge, thereby improving sealing reliability of the sealing material in the notch. Such sealing structure is simple and highly reliable, occupies small space, and can also increase the energy density of the electrochemical apparatus.

### BRIEF DESCRIPTION OF DRAWINGS

The above and/or additional aspects and advantages of this application will become obviously easy to understand based on the description of the embodiments with reference to the following drawings.
FIG. 1 is a schematic structural diagram of an electrochemical apparatus according to an embodiment of this application;
FIG. 2 is a schematic structural diagram of an electrode assembly according to an embodiment of this application;
FIG. 3A is a schematic structural diagram of a notch according to an embodiment of this application;
FIG. 3B is a schematic cross-sectional diagram of a notch according to another embodiment of this application;
FIG. 4 is an enlarged partial schematic diagram of a notch filled with a sealing material according to an embodiment of this application;
FIG. 5A, FIG 5B to FIG. 5C are schematic structural diagrams of cross sections of a first housing body according to an embodiment of this application;
FIG. 6 is a schematic structural diagram of separate structures formed by a sealing auxiliary member and a housing according to an embodiment of this application;
FIG. 7 is a schematic structural diagram of a first housing body and a second housing body being connected vertically according to an embodiment of this application;
FIG. 8 is a schematic structural diagram of an integral structure formed by a sealing auxiliary member and a housing according to an embodiment of this application;
FIG. 9 is a schematic structural diagram of a notch provided with a recess on a bottom surface according to an embodiment of this application;
FIG. 10 is a schematic structural diagram of a notch provided with a boss on a bottom surface according to an embodiment of this application;
FIG. 11 is a schematic structural diagram of a first housing body and a second housing body being connected vertically according to another embodiment of this application;
FIG. 12 is a schematic structural diagram of only a second housing body being provided with an L-shaped step portion according to an embodiment of this application;
FIG. 13 is a schematic structural diagram of both a first housing body and a second housing body being provided with an L-shaped step portion according to an embodiment of this application;
FIG. 14 is a schematic structural diagram of a first housing body and a second housing body being connected horizontally according to an embodiment of this application;
FIG. 15 is a schematic structural diagram of a first housing body and a second housing body being connected horizontally according to another embodiment of this application;
FIG. 16 is a cross-sectional view of a structure formed by a sealing material and a cathode tab according to an embodiment of this application;
FIG. 17 is a cross-sectional view of a structure formed by a sealing material, a high-temperature protection material, and a cathode tab according to an embodiment of this application;
FIG. 18 is a schematic structural diagram of a cathode tab and an anode tab protruding out from different sides of a housing according to an embodiment of this application;
FIG. 19 is a schematic structural diagram of an anode tab and a cathode tab protruding out from a same side of a housing according to an embodiment of this application; and
FIG. 20 is a schematic diagram of modules in an electric apparatus according to an embodiment of this application.

Reference signs of main elements:
Electrode assembly 10, housing 20, sealing material 30, high-temperature protection material 40, electrochemical apparatus 100, cathode tab 101, anode tab 102, cathode plate 103, anode plate 104, separator 105, first housing body 201, second housing body 202, sealing auxiliary member 203, notch 220, electric apparatus 200, side wall 2020, bottom wall 2022, first side wall 2010, first bottom wall 2012, second side wall 2024, second bottom wall 2026, butting portion 2030, recess 2201, side edge 2202, and boss 2203.

### DETAILED DESCRIPTION

The embodiments of this application are described in detail below. Examples of the embodiments are shown in the accompanying drawings, and the same or similar reference signs indicate the same or similar elements or elements with the same or similar functions. The embodiments described below with reference to the drawings are examples and only used to explain this application, but cannot be construed as a limitation to this application.

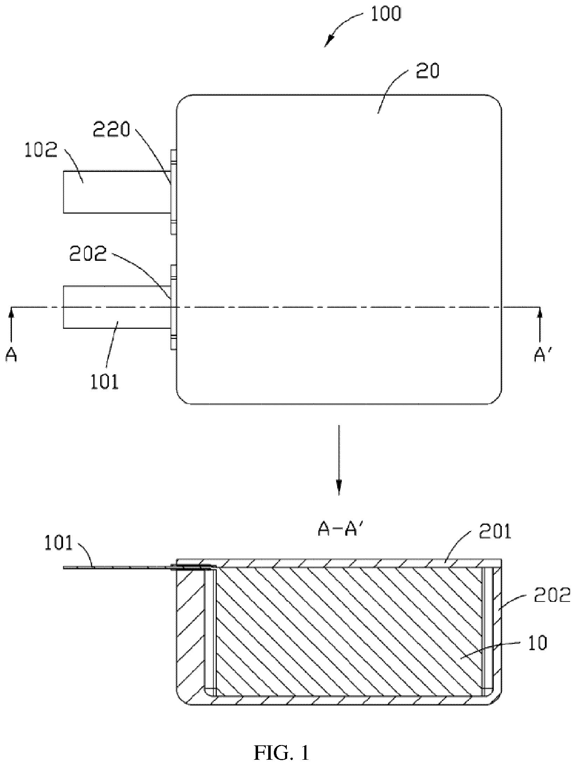

An electrochemical apparatus 100 in this embodiment of this application is described in detail below with reference to FIG. 1 to FIG. 19.

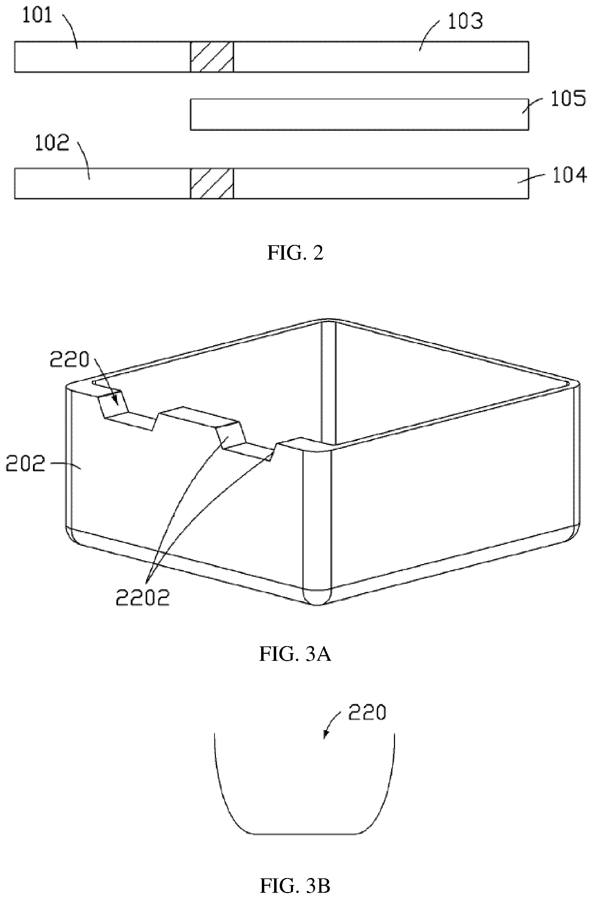

As shown in FIG. 1 to FIG. 4, the electrochemical apparatus 100 in this embodiment of this application includes an electrode assembly 10 and a housing 20. The electrode assembly 10 is accommodated in the housing 20. As shown in FIG. 2, the electrode assembly 10 may include a cathode tab 101, an anode tab 102, a cathode plate 103, an anode plate 104, and a separator 105. The separator 105 is disposed between the cathode plate 103 and the anode plate 104, the cathode tab 101 is electrically connected to a cathode current collector of the cathode plate 103, and the anode tab 102 is electrically connected to an anode current collector of the anode plate 104. The electrode assembly may be a wound cell formed by the cathode plate 103, the anode plate 104, and the separator 105 through winding, or a laminated cell formed by the cathode plate 103, the anode plate 104, and the separator 105 through stacking.

In some embodiments, the cathode tab 101 and the anode tab 102 may be made of an electrolyte-resistant conductive material, for example, steel alloy, aluminum alloy, iron alloy, copper alloy, or nickel alloy. The cathode current collector of the cathode plate 103 is copper foil, and the anode current collector of the anode plate 104 is aluminum foil.

In some embodiments, the cathode tab 101 may be electrically connected to the cathode current collector of the cathode plate 103 via welding or another connection method (for example, gluing with conductive glue), and the cathode tab 101 can also be formed by directly tailoring the cathode current collector of the cathode plate 103. The anode tab 102 may be electrically connected to the anode current collector of the anode plate 104 via welding or another connection method (for example, gluing with conductive glue), or the anode tab 102 may be directly made from the anode current collector of the anode plate 104 through cutting.

In some embodiments, as shown in FIG. 1, the housing 20 includes a first housing body 201 and a second housing body 202. At least one of the first housing body 201 or the second housing body 202 is provided with a notch 220. That is, the notch 220 may be provided only in the first housing body 201; the notch 220 may be provided only in the second housing body 202; or the notch 220 may be provided in both the first housing body 201 and the second housing body 202 (such disposing manner may be as follows: a first notch is provided in the first housing body 201, a second notch is provided in the second housing body 202, and the first notch and the second notch together form the notch 220).

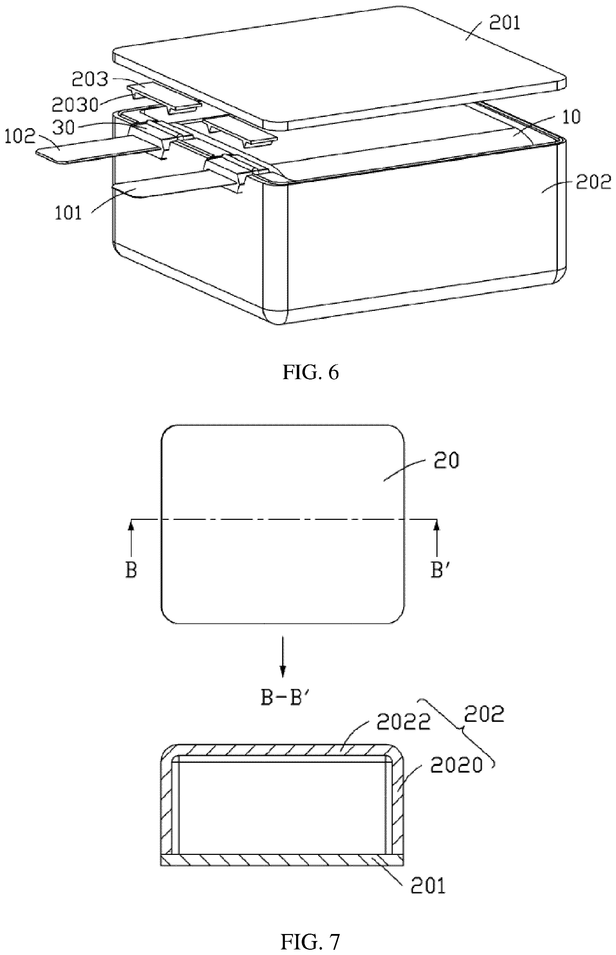

In some embodiments, as shown in FIG. 3A, a side edge 2202 of the notch 220 is inclined with respect to a bottom edge of the notch 220, and the bottom edge of the notch 220 is substantially parallel to bottom walls 2022 of the first housing body 201 and the second housing body 202 (as shown in FIG. 7). In this case, the side edge 2202 of the notch 220 is non-vertical with respect to the bottom edge of the notch. Both side edges 2202 of the notch 220 are inclined with respect to the bottom edge of the notch 220. The side edges 2202 of the notch 220 may be oblique edges, curved edges, irregularly shaped edges, or the like. For example, as shown in FIG. 3A, the notch 220 is a trapezoid in shape, and the notch 220 includes two oblique edges. FIG. 3B is a cross-sectional view of a notch 220. The notch 220 includes two curved edges.

In another embodiment, the notch 220 may have only one side edge that is non-vertical with respect to the bottom edge of the notch.

In some embodiments, as shown in FIG. 1, each of the cathode tab 101 and the anode tab 102 may protrude out from one notch 220 to outside the housing 20. In another embodiment, the cathode tab 101 and the anode tab 102 may protrude out from a same notch 220 to outside the housing 20. That is, when the cathode tab 101 and the anode tab 102 protrude out from the same notch 220 to outside the housing 20, the housing 20 needs to be provided with only one notch 220; or when each of the cathode tab 101 and the anode tab 102 protrudes out from one notch 220 to outside the housing 20, the housing 20 needs to be provided with two notches 220.

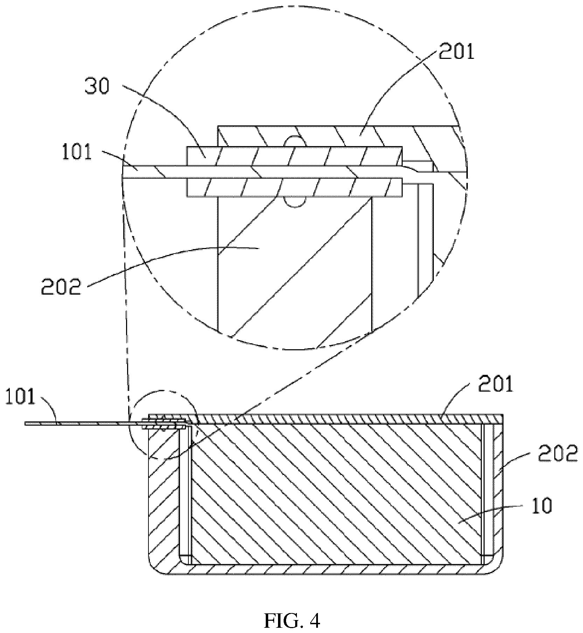

As shown in FIG. 4, to isolate an inner cavity of the housing 20 from an outer surface of the housing 20 and ensure electrochemical stability of the electrode assembly 10 in the housing 20, the notch 220 is also filled with a sealing material 30. In the process of making the first housing body 201 and the second housing body 202 into a whole, for example, external pressure is applied to the first housing body 201 in a direction perpendicular to the bottom surface of the notch 220. In this case, the first housing body 201 is attached to the second housing body 202. Then the first housing body 201 and the second housing body 202 are integrated by one or more of a gluing process, a heat sealing process, and a welding process. Because the side edge 2202 of the notch 220 is non-vertical with respect to the bottom edge of the notch 220, when the external pressure is applied to the side edge 2202, the external pressure can be decomposed into a first component force perpendicular to the side edge 2202 and a second component force parallel to the side edge 2202, to compress the sealing material in two directions, thereby improving the compression effect and sealing reliability of the sealing material 30.

In some embodiments, the sealing material 30 may be an elastic sealing material. The elastic sealing material optionally has the following material features: resistance to electrolyte corrosion, good medium resistance, oxidation resistance, aging resistance, high-temperature resistance, high material density, low air permeability, good insulation, material compressibility, and good mechanical performance and processing performance. The elastic sealing material may be selected from any one of polypropylene, polycarbonate, polyamide, polystyrene, fluorine rubber, or soluble polytetrafluoroethylene.

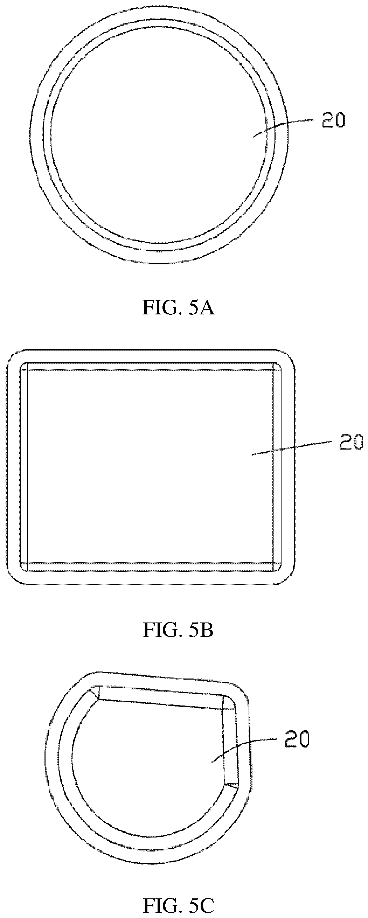

In some embodiments, the first housing body 201 and the second housing body 202 may be made through injection molding, machining, stamping, or other processing methods. Sizes of the first housing body 201 and the second housing body 202 can be set based on an actual design requirement of the electrochemical apparatus 100, and are not limited herein. Both the first housing body 201 and the second housing body 202 are made of a plastic material. The plastic material is optionally a plastic material resistant to electrolyte, and may be selected from any one of liquid crystalline polymer, 4-hydroxybenzaldehyde, polyethylene terephthalate, polyvinyl chloride, polyimide, acrylonitrile-butadiene-styrene copolymer, polycarbonate, or polyamide. The first housing body 201 is optionally the same as the second housing body 202 in cross-sectional shape. Cross sections of the first housing body 201 and the second housing body 202 may be circular, quadrilateral, arc, oval, triangular, polygonal (with more than four edges), irregularly shaped, or the like. As shown in FIG. 5A, the cross section of the housing 20 is circular. As shown in FIG. 5B, the cross section of the housing 20 is square. As shown in FIG. 5C, the cross section of the housing 20 is irregularly-shaped.

In some embodiments, in the process of making the first housing body 201 and the second housing body 202 into a whole, the elastic sealing material in the notch 220 can be tightly compressed (with a compression ratio of 10% to 40%). The compressed elastic sealing material can fill up the entire notch 220 so that the first housing body 201, the second housing body 202, the notch 220, the tabs in the notch 220, and the elastic sealing material form a sealed structure.

In some embodiments, the housing 20 is further formed by assembling three or more housing portions. For example, the housing 20 includes a first housing body, a second housing body, and a third housing body that are independent of one another, the first housing body is a top cover of the housing 20, the second housing body is a side wall of the housing 20, and the third housing body is a bottom cover of the housing 20. The first housing body, the second housing body, and the third housing body are sequentially connected to form the housing 20. For another example, the housing 20 includes a first housing body, a second housing body, a third housing body, and a fourth housing body that are independent of one another, the first housing body is a top cover of the housing 20, the second housing body is a first side wall of the housing 20, the second housing body is a second side wall of the housing 20, and the fourth housing body is a bottom cover of the housing 20. The first housing body, the second housing body, the third housing body, and the fourth housing body are sequentially connected to form the housing 20.

In the electrochemical apparatus 100 in this embodiment of this application, a notch is provided in the housing for extending the tab, the notch is filled with a sealing material, and the side edge of the notch is non-vertical with respect to the bottom edge of the notch. This can improve the compression effect of the sealing material, makes the sealing structure simple and reliable, and occupies small space of the housing, thereby increasing energy density of the electrochemical apparatus.

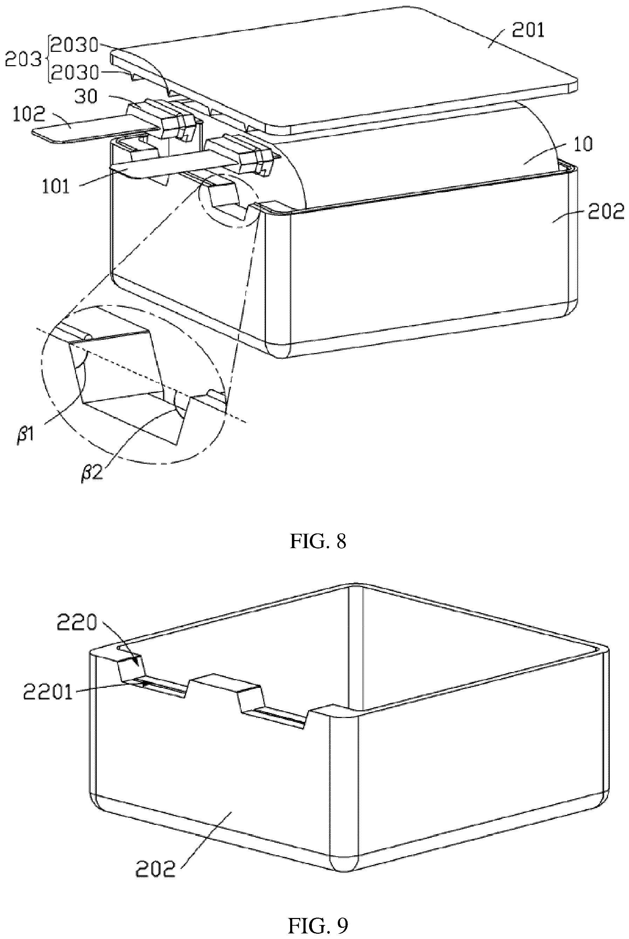

As shown in FIG. 6, the housing 20 includes a first housing body 201, a second housing body 202, and a sealing auxiliary member 203. The first housing body 201 is the top cover of the housing 20, and the second housing body 202 includes a side wall 2020 and a bottom wall 2022 connected to the side wall 2020 (as shown in FIG. 7). The side wall 2020 may be a circular side wall, a quadrangular side wall, a polygonal side wall (with more than four edges), an irregularly shaped side wall, or the like. The notch 220 is disposed in the side wall 2020 of the second housing body 202, and the notch 220 may be a trapezoid in shape. Because the first housing body 201 is the top cover, the first housing body 201 is provided with no notch. The cathode tab 101 protrudes out from the notch 220 to outside the housing 20, and the sealing material 30 (such as fluorine rubber) is disposed in the notch 220. When the housing is being assembled, the first housing body 201 can butt against the sealing material 30 within the notch 220. The first housing body 201 and the second housing body 202 may be connected vertically. The sealing auxiliary member 203 and the housing 20 may be an integral structure or separate structures. As shown in FIG. 6, when the sealing auxiliary member 203 and the housing 20 are separate structures, the sealing auxiliary member 203 is independent of the first housing body 201 and the second housing body 202, and the number of sealing auxiliary members 203 is the same as the number of the notches 220. As shown in FIG. 8, when the sealing auxiliary member 203 and the housing 20 are the integral structure, the sealing auxiliary member 203 in integrated on the first housing body 201.

In some embodiments, as shown in FIG. 6, the sealing auxiliary member 203 includes a butting portion 2030, the butting portion 2030 is located at a corner of the notch 220, and the butting portion 2030 is configured to butt against the sealing material 30 in a corner region at the top of the notch 220. For example, as shown in FIG. 8, the butting portion 2030 is configured to butt against the sealing material 30 in corner regions β1 and β2 at the top of the notch 220.

In some embodiments, length of the butting portion 2030 may be less than or equal to width of the notch 220 (that is, thickness of the side wall 2020).

In assembling the housing, the second housing body 202 can be placed and fastened on a platform fixture first, then the first housing body 201 is placed on the second housing body 202, and external pressure is applied to the first housing body 201. In this case, the first housing body 201 is attached to the second housing body 202. Then the first housing body 201 and the second housing body 202 are integrated by one or more of a gluing process, a heat sealing process, or a welding process. In addition, the sealing material 30 (such as fluorine rubber) at the notch 220 is tightly compressed (with a compression ratio of up to 10% to 40%), and the compressed fluorine rubber can fill up the entire notch 220, so as to isolate an inner cavity of the housing 20 from an outer surface of the housing 20 to ensure electrochemical stability of the electrode assembly 10 in the housing 20.

As shown in FIG. 9, to improve sealing reliability of the sealing material 30, a recess 2201 is provided in the bottom surface of the notch 220, and a boss corresponding to the recess 2201 can be provided at the sealing material 30. The boss fits into the recess 2201, so that the sealing material 30 can be tightly filled in the notch 220 and a limiting structure is formed between the sealing material 30 and the notch 220.

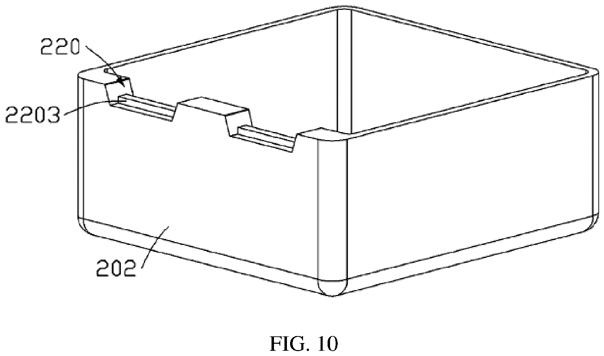

As shown in FIG. 10, to improve sealing reliability of the sealing material 30, a boss 2203 may be further provided in the bottom surface of the notch 220, and a recess corresponding to the boss 2203 can be provided at the sealing material 30. The boss 2203 fits into the recess, so that the sealing material 30 can be tightly filled in the notch 220 and a limiting structure is formed between the sealing material 30 and the notch 220.

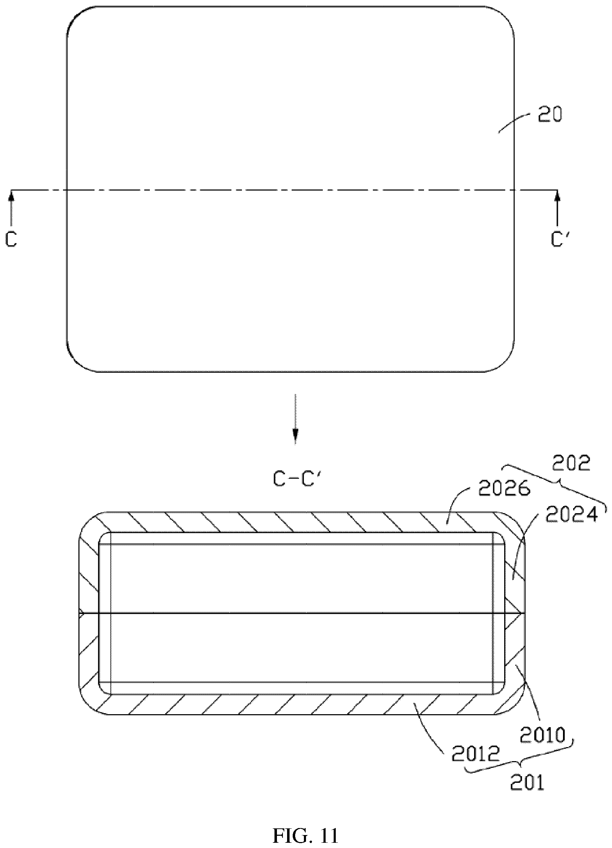

As shown in FIG. 11, the housing 20 includes a first housing body 201 and a second housing body 202. The first housing body 201 and the second housing body 202 each include a side wall and a bottom wall connected to the side wall. Specifically, the first housing body 201 includes a first side wall 2010 and a first bottom wall 2012 connected to the first side wall 2010, and the second housing body 202 includes a second side wall 2024 and a second bottom wall 2026 connected to the second side wall 2024. In some embodiments, to allow the sealing material 30 to be tightly filled into the notch 220, as shown in FIG. 9 or FIG. 10, a boss or a recess may also be provided in the bottom surface of the notch 220, and the sealing material 30 can also be provided with a boss corresponding to the recess, or a recess corresponding to the boss.

In some embodiments, when the first housing body 201 includes a side wall, the first housing body 201 may also be provided with a first notch, the second housing body 202 is provided with a second notch corresponding to the first notch, and the first notch and the second notch together form the notch 220. For example, both the first notch and the second notch are trapezoidal notches. In assembling the housing, the second housing body 202 can be placed and fastened on a platform fixture first, then the first housing body 201 is placed on the second housing body 202, with the first notch of the first housing body 201 aligned with the second notch of the second housing body, and then external pressure is applied to the first housing body 201. In this case, the first housing body 201 is attached to the second housing body 202. Finally, the first housing body 201 and the second housing body 202 are integrated by one or more of a gluing process, a heat sealing process, or a welding process. In addition, the sealing material 30 at the notch 220 is tightly compressed.

In some embodiments, to allow the sealing material 30 to be tightly filled into the notch 220, recesses or bosses may be provided in the bottom surfaces of the first notch and the second notch. For example, recesses are provided in both the bottom surfaces of the first notch and the second notch, and the sealing material 30 is provided with bosses corresponding to the two recesses; bosses are provided in both the bottom surfaces of the first notch and the second notch, and the sealing material 30 is provided with recesses corresponding to the two bosses; or, a recess is provided in the bottom surface of one of the first notch and the second notch, a boss is provided in the bottom surface of the other one of the first notch and the second notch, and the sealing material 30 is provided with bosses and recesses corresponding to the recesses and the bosses.

In some embodiments, to improve sealing reliability of the sealing material 30, a recess or a boss may be also provided in the bottom surface of one of the first notch and the second notch, and the sealing material 30 is provided with a boss or a recess corresponding to the recess and the boss.

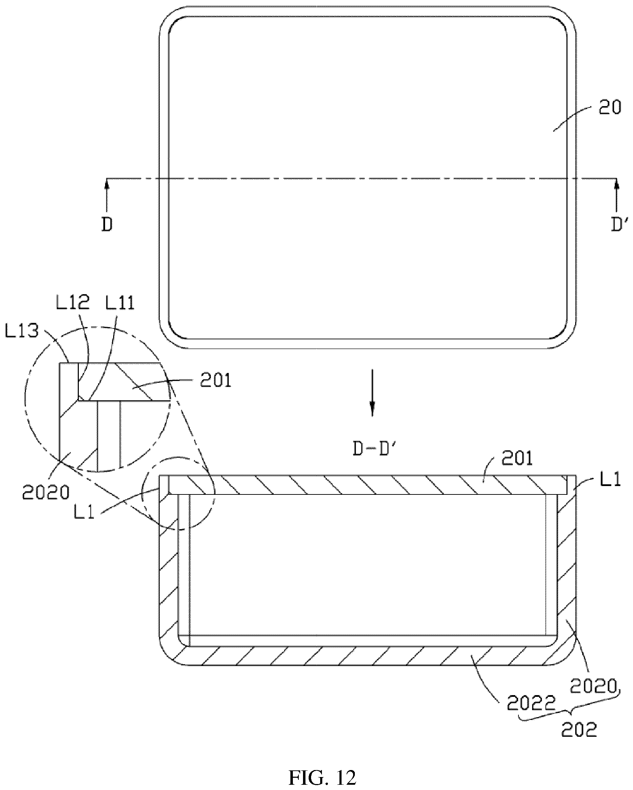

As shown in FIG. 12, the housing 20 includes a first housing body 201 and a second housing body 202. The first housing body 201 is the top cover of the housing 20, and the second housing body 202 includes a side wall 2020 and a bottom wall 2022 connected to the side wall 2020. The first housing body 201 and the second housing body 202 are connected vertically. An L-shaped step portion L1 is disposed on the side wall 2020 of the second housing body 202. The L-shaped step portion L1 is configured to support the first housing body 20.

In some embodiments, the L-shaped step portion L1 may include a first horizontal portion L11, a first vertical portion L12, and a second horizontal portion L13. The L-shaped step portion L1 formed by the first horizontal portion L11, the first vertical portion L12, and the second horizontal part L13 is in a one-step shape.

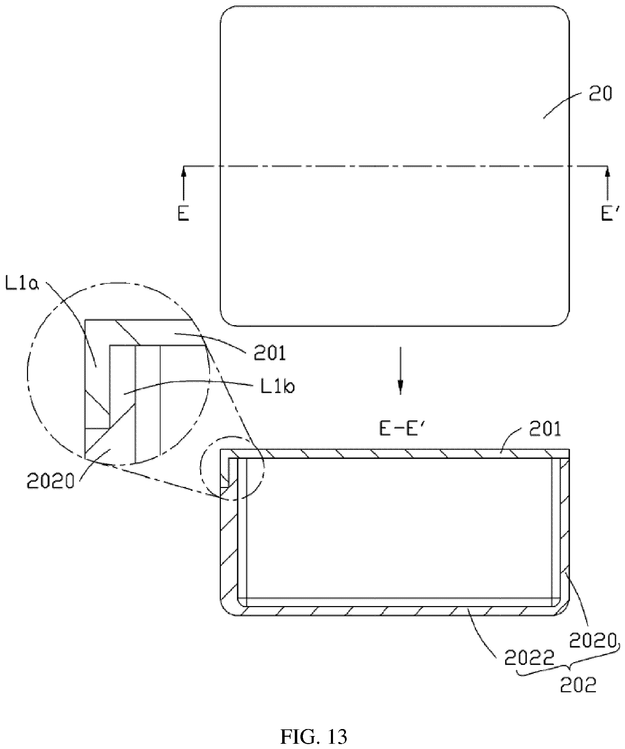

As shown in FIG. 13, the housing 20 includes a first housing body 201 and a second housing body 202. The first housing body 201 is the top cover of the housing 20, and the second housing body 202 includes a side wall 2020 and a bottom wall 2022 connected to the side wall 2020. The first housing body 201 and the second housing body 202 are connected vertically. A first L-shaped step portion L1a is disposed on the first housing body 201, and a second L-shaped step portion L1b corresponding to the first L-shaped step portion L1a is disposed on the second housing body 202. The first L-shaped step portion L1a is tenon jointed with the second L-shaped step portion L1b.

In some embodiments, the first L-shaped step portion L1a and the second L-shaped step portion L1b optionally include the same number of steps. The first L-shaped step portion L1a and the second L-shaped step portion L1b may be in a one-step shape, or a two-step or multiple-step shape.

In another embodiment, shapes of the step portions L1, L1a, and L1b are not limited to the "L" shape, and may be other shapes with steps.

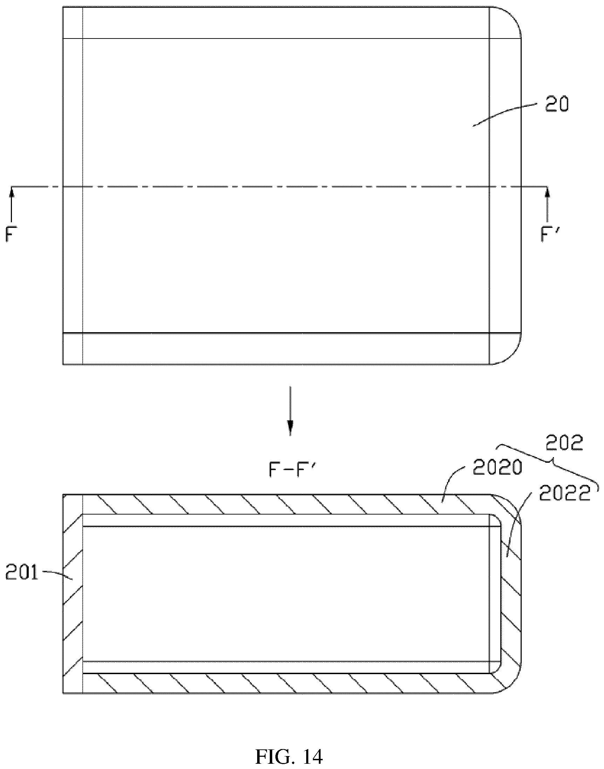

The housing 20 shown in FIG. 14 has the same structure as the housing 20 shown in FIG. 6, except that the first housing body 201 and the second housing body 202 are connected horizontally. Details are not described herein again.

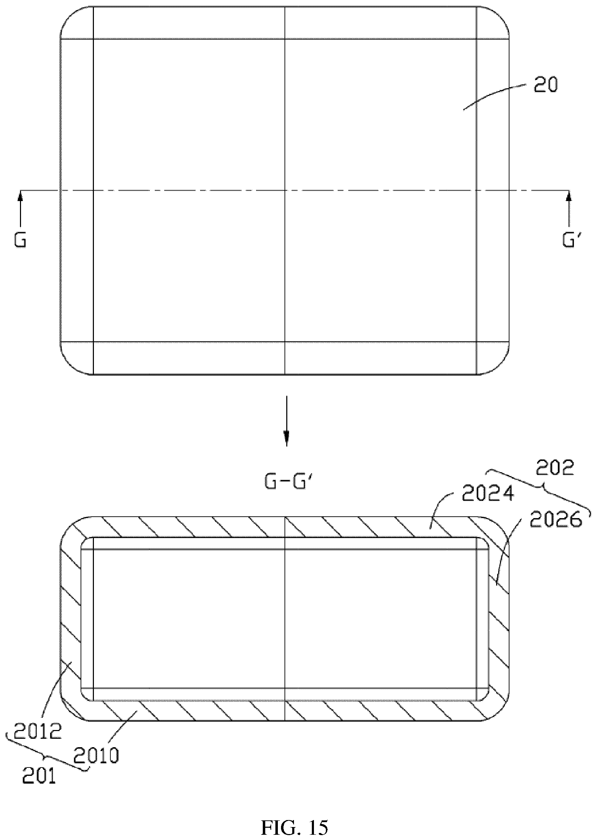

The housing 20 shown in FIG. 15 has the same structure as the housing 20 shown in FIG. 11, except that the first housing body 201 and the second housing body 202 are connected horizontally. Details are not described herein again.

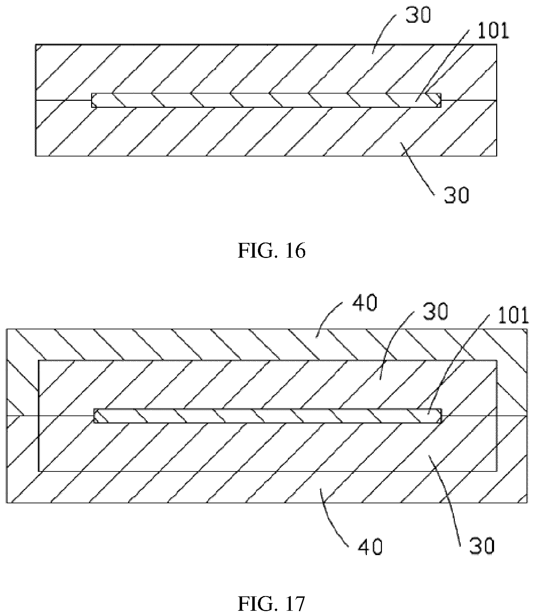

As shown in FIG. 16, taking the notch 220 including only the cathode tab 101 as an example for description, the sealing material 30 can be pre-processed through any one of the gluing process, the hot-melt process, the welding process, and the injection molding process, so as to form a structure on the cathode tab 101, and then the structure is disposed in the notch 220. In assembling the housing, the structure is tightly compressed to deform, and the compressed sealing material 30 can fill up the entire notch 220, thereby isolating the inner cavity of the housing 20 from the outer surface of the housing 20.

In some embodiments, to enhance rigidity of the sealing material 30 filled in the notch 220, a reinforcing rib may also be disposed on the structure, and a shape of the reinforcing rib may be set according to an actual need.

As shown in FIG. 17, because the melting point of the sealing material is generally 150 degrees Celsius, in assembling the first housing body 201 and the second housing body 202 into the housing 20 through welding, to prevent high welding temperature from damaging the sealing material 30, a structure composed of the sealing material 30 and the high-temperature protection material 40 may be formed on the cathode tab 101 in advance. A layer of high-temperature protection material 40 is applied to the outer surface of the sealing material 30, to prevent the sealing material 30 from being damaged by the high temperature during welding. In assembling the housing, the structure is tightly compressed to deform, the compressed sealing material 30 can fill up the notch 220, and the high-temperature protection material 40 is filled between a wall of the notch 220 and the sealing material 30, to prevent the sealing material 30 from being damaged by the high temperature during welding. Because in the process of assembling the first housing body 201 and the second housing body 202 into the housing 20 through welding, the welding temperature is nearly 300 degrees Celsius, a melting point of the high-temperature protection material 40 is optionally greater than or equal to 300 degrees Celsius.

In some embodiments, the high-temperature protection material 40 may be selected from any one of steel alloy, aluminum alloy, iron alloy, copper alloy, liquid crystalline polymer, 4-hydroxybenzaldehyde, polyethylene terephthalate, polyvinyl chloride, polyimide, acrylonitrile-butadiene-styrene copolymer, polycarbonate, polyamide, or polystyrene.

In some embodiments, the cathode tab 101, the sealing material 30, and the high-temperature protection material 40 can form an m-layer structure, and a combination sequence of materials of different layers can be determined based on an actual need, but an outermost layer of the structure needs to be the high-temperature protection material 40, where m is optionally a positive integer greater than or equal to 3 and less than or equal to 10. For example, the cathode tab 101, the sealing material 30, and the high-temperature protection material 40 form a three-layer structure, where the first layer is the cathode tab 101, the second layer is the sealing material 30, and the third layer is the high-temperature protection material 40. The cathode tab 101, the sealing material 30, and the-high temperature protection material 40 form a five-layer structure, where the first layer is the cathode tab 101, the second layer is the sealing material 30, the third layer is the high-temperature protection material 40, the fourth layer is the sealing material 30, and the fifth layer is the high-temperature protection material 40.

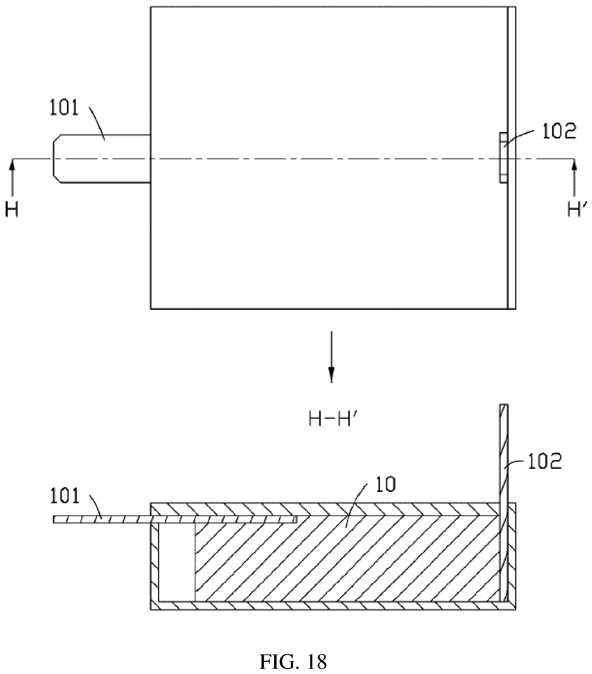

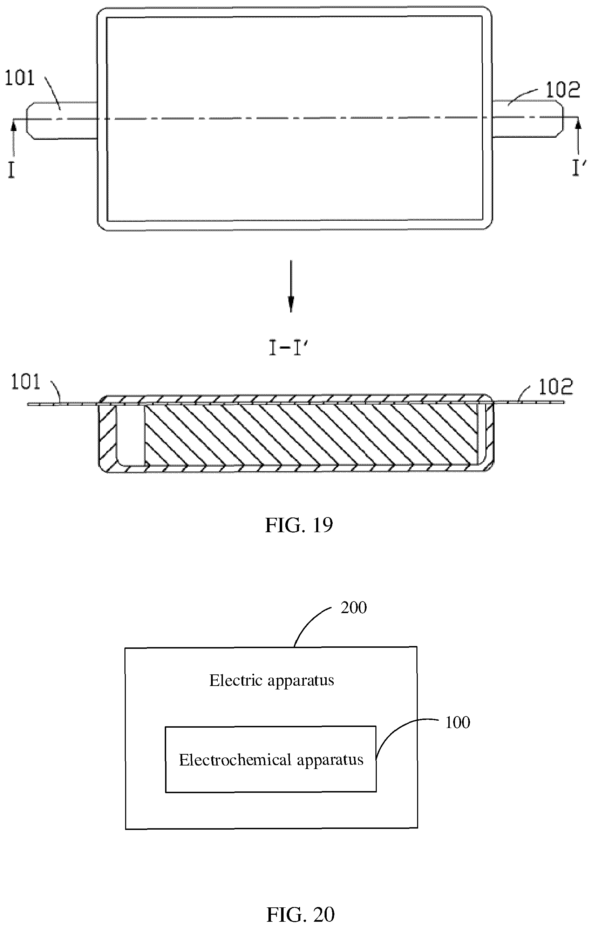

As shown in FIG. 18 and FIG. 19, when the cathode tab 101 and the anode tab 102 do not share one notch 220, the cathode tab 101 and the anode tab 102 may protrude out from different sides of the housing 20.

In some embodiments, as shown in FIG. 1, when the cathode tab 101 and the anode tab 102 do not share one notch 220, the cathode tab 101 and the anode tab 102 may alternatively protrude out from a same side of the housing 20.

In addition, as shown in FIG. 20, this application also discloses an electric apparatus 200, and the electric apparatus 200 includes the electrochemical apparatus 100 according to any one of the foregoing embodiments. The electric apparatus 200 may be an electric motorcycle, an electric bicycle, an electric tool, an electric vehicle, an unmanned aerial vehicle, a mobile phone, a tablet computer, a personal digital assistant, a personal computer, or any other appropriate rechargeable devices.

In the descriptions of this application, it should be understood that the orientations or positional relationships indicated by the terms "center", "vertical", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships shown in the accompanying drawings, are merely intended to facilitate the descriptions of this application and simplify the descriptions, are not intended to indicate or imply that the apparatuses or components mentioned in this application must have specific orientations, or be constructed and operated for a specific orientation, and therefore shall not be construed as a limitation to this application. In the descriptions of this application, "a plurality of" means at least two.

In the description of this specification, the description referring to the terms "an embodiment", "some embodiments", "illustrative embodiments", "an example", "a specific example", or "some examples" means a specific feature, structure, material or characteristic described with reference to the embodiment or example is included in at least one embodiment or example of the this application. In this specification, illustrative expressions of these terms do not necessarily refer to the same embodiment or example. Moreover, the specific feature, structure, material, or characteristic described may be combined in any suitable manner in any one or more embodiments or examples.

Although the embodiments of this application have been shown and described, those of ordinary skill in the art can understand that various changes, modifications, substitutions, and variants of these embodiments may be made without departing from the principles and purposes of this application, and the scope of this application is limited by the claims and their equivalents.

## Claims

1. An electrochemical apparatus, comprising an electrode assembly and a housing for accommodating the electrode assembly; **characterized in that**,
the housing comprises a first housing body and a second housing body fixedly connected to the first housing body, at least one of the first housing body or the second housing body is provided with a notch, and a side edge of the notch is non-vertical with respect to a bottom edge of the notch; and the electrode assembly comprises a tab, wherein the tab protrudes out from the notch to outside the housing, and the notch is filled with a sealing material.

2. The electrochemical apparatus according to claim 1, **characterized in that**, the sealing material comprises any one of polypropylene, polycarbonate, polyamide, polystyrene, fluorine rubber, or soluble polytetrafluoroethylene.

3. The electrochemical apparatus according to claim 1, **characterized in that**, the housing further comprises a sealing auxiliary member, the sealing auxiliary member comprises a butting portion, and the butting portion is located at a corner of the notch and is configured to butt against the sealing material in a corner region at the top of the notch.

4. The electrochemical apparatus according to claim 3, **characterized in that**, the sealing auxiliary member and the housing are an integral structure or separate structures.

5. The electrochemical apparatus according to claim 3, **characterized in that**, one of a wall of the notch or the sealing material is provided with a boss and the other is provided with a recess, wherein the boss fits into the recess.

6. The electrochemical apparatus according to claim 3, **characterized in that**, the first housing body is a top cover of the housing, and the second housing body comprises a side wall and a bottom wall connected to the side wall.

7. The electrochemical apparatus according to claim 6, **characterized in that**, the butting portion is disposed at the top cover, and the notch is disposed in the side wall.

8. The electrochemical apparatus according to claim 6, **characterized in that**, the side wall is provided with a step portion, and the step portion is configured to support the top cover.

9. The electrochemical apparatus according to claim 6, **characterized in that**, the side wall is provided with a first step portion, the top cover is provided with a second step portion corresponding to the first step portion, and the first housing body and the second housing body are connected via the first step portion and the second step portion to form the housing.

10. The electrochemical apparatus according to claim 1, **characterized in that**, the first housing body is provided with a first notch, the second housing body is provided with a second notch corresponding to the first notch, and the first notch and the second notch together form the notch.

11. The electrochemical apparatus according to claim 10, **characterized in that**, a boss is disposed at a bottom surface of the first notch and/or the second notch, and the sealing material is provided with a recess corresponding to the boss, wherein the boss fits into the recess.

12. The electrochemical apparatus according to claim 10, **characterized in that**, a recess is disposed at a bottom surface of the first notch and/or the second notch, and the sealing material is provided with a boss corresponding to the recess, wherein the boss fits into the recess.

13. The electrochemical apparatus according to claim 10, **characterized in that**, the first housing body comprises a first side wall and a first bottom wall connected to the first side wall, and the second housing body comprises a second side wall and a second bottom wall connected to the second side wall.

14. The electrochemical apparatus according to claim 13, **characterized in that**, the first side wall is provided with a first step portion, the second side wall is provided with a second step portion corresponding to the first step portion, and the first housing body and the second housing body are connected via the first step portion and the second step portion to form the housing.

15. The electrochemical apparatus according to claim 1, **characterized in that**, the notch is a trapezoid in shape.

16. The electrochemical apparatus according to claim 1, **characterized in that**, the housing further comprises a third housing body, the first housing body is a top cover of the housing, the second housing body is a side wall of the housing, the third housing body is a bottom cover of the housing, and the first housing body, the second housing body, and the third housing body are sequentially connected to form the housing.

17. The electrochemical apparatus according to claim 1, **characterized in that**, a high-temperature protection material is filled between the wall of the notch and the sealing material; and the tab, the sealing material, and the high-temperature protection material form an m-layer structure in the notch, wherein an outermost layer of the structure is the high-temperature protection material, and m is a positive integer greater than or equal to 3 and less than or equal to 10.

18. The electrochemical apparatus according to claim 17, **characterized in that**, a melting point of the high-temperature protection material is greater than or equal to 300°C.

19. The electrochemical apparatus according to claim 17, **characterized in that**, the protection material comprises any one of steel alloy, aluminum alloy, iron alloy, copper alloy, liquid crystalline polymer, 4-hydroxybenzaldehyde, polyethylene terephthalate, polyvinyl chloride, polyimide, acrylonitrile-butadiene-styrene copolymer, polycarbonate, polyamide, or polystyrene.

20. The electrochemical apparatus according to claim 1, **characterized in that**, the first housing body is fixedly connected to the second housing body vertically or horizontally.

21. The electrochemical apparatus according to claim 1, **characterized in that**, the first housing body is fixedly connected to the second housing body by at least one of gluing, heat sealing, or welding.

22. The electrochemical apparatus according to claim 1, **characterized in that**, the first housing body and the second housing body are both made of plastic.

23. The electrochemical apparatus according to claim 22, **characterized in that**, the plastic is any one of liquid crystalline polymer, 4-hydroxybenzaldehyde, polyethylene terephthalate, polyvinyl chloride, polyimide, acrylonitrile-butadiene-styrene copolymer, polycarbonate, or polyamide.

24. The electrochemical apparatus according to claim 1, **characterized in that**, the electrode assembly comprises two tabs, and the two tabs both protrude out from the notch to outside the housing.

25. The electrochemical apparatus according to claim 1, **characterized in that**, the electrode assembly comprises a cathode plate, an anode plate, a separator and two tabs; the separator is disposed between the cathode plate and the anode plate, and the two tabs are respectively electrically connected to a cathode current collector of the cathode plate and an anode current collector of the anode plate.

26. The electrochemical apparatus according to claim 25, **characterized in that**, the two tabs protrude out from a same side of the housing, or the two tabs protrude out from different sides of the housing.

27. An electric apparatus, comprising the electrochemical apparatus according to any one of claims 1 to 26.
